# EUROPEAN PATENT APPLICATION

(11) **EP 4 787 332 A1**
(43) Date of publication of application: **05.08.2026**
(21) Application number: 24879170.9
(22) Date of filing: 21.10.2024
(51) Int. Cl.: G06V 10/44, G06V 10/77

(54) **FEATURE SAMPLING METHOD AND APPARATUS, DEEP LEARNING METHOD AND APPARATUS, DEVICE, AND MEDIUM**

(30) Priority: 20.10.2023 CN 202311388091
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WANG, Bin, Ningbo, Zhejiang 315899 (CN); ZHANG, Zhengming, Ningbo, Zhejiang 315899 (CN)
(74) Representative: Michalski Hüttermann & Partner mbB
(86) International application number: PCT/CN2024/126078
(87) International publication number: WO 2025/082530

(57) **Abstract**

Disclosed herein are a feature sampling method and apparatus, a deep learning method and apparatus, a device, and a medium. The feature sampling method includes: acquiring images captured by a plurality of image recording devices, and extracting image features of the images captured by the image recording devices; according to a plurality of preset heights, predicting height distribution information of the image features of the images, to obtain multi-height distribution prediction results of the image features, and then obtain multi-height distribution image features; according to the multi-height distribution image features and a mapping relationship between image feature positions and grid positions in a 3D space where panoramic BEV features are located, determining multi-height distribution BEV features; and according to the multi-height distribution BEV features, sampling, from the image features of the image recording devices, an image feature at a position corresponding to a BEV feature into a grid of the 3D space.

## Description

### CROSS-REFERENCE TO RELATED APPLICATIONS

The present application claims priority to Chinese Patent Application No. 202311388091.6 filed with the China National Intellectual Property Administration on Oct. 20, 2023, the entire contents of which are incorporated herein by reference.

### TECHNICAL FIELD

Embodiments of the present disclosure relate to, but are not limited to, the technical field of image processing, and in particular, to a feature sampling method and apparatus, a deep learning method and apparatus, a device, and a medium.

### BACKGROUND

A method for obtaining bird's eye view (BEV) features based on geometric transformation may include an approach based on top-down geometric transformation. Specifically, first, according to the calibration parameters, a camera intrinsic and extrinsic parameter transformation matrix is utilized to obtain the corresponding positions on the image onto which grid points in a three-dimensional (3D) space are projected. Second, the features at the corresponding positions are sampled into the original 3D space, i.e., feature sampling, to ultimately construct BEV spatial features.

### SUMMARY

The following is a summary of subject matter described in detail in the present disclosure. This summary is not intended to limit the scope of protection of the claims.

Embodiments of the present disclosure provide a feature sampling method and apparatus, a deep learning method and apparatus, a device, and a medium.

An embodiment of the present disclosure provides a feature sampling method, including: acquiring images captured by image recording devices, and extracting image features of the images captured by the image recording devices; according to a plurality of preset heights, predicting height distribution information of the image features of the images, to obtain multi-height distribution prediction results of the image features; according to the multi-height distribution prediction results of the image features, obtaining multi-height distribution image features; according to the multi-height distribution image features and a mapping relationship between image feature positions and grid positions in a 3D space where panoramic BEV features are located, determining multi-height distribution BEV features; and according to the multi-height distribution BEV features, sampling, from the image features of the image recording devices, the image feature at the position corresponding to the BEV feature into the grid of the 3D space.

Optionally, according to the multi-height distribution BEV features, sampling, from the image features of the image recording devices, the image feature at the position corresponding to the BEV feature into the grid of the 3D space includes: fusing the multi-height distribution BEV features to obtain fused BEV features; and according to the fused BEV features, sampling an image feature of the image recording devices at a position corresponding to a fused BEV feature into a grid of the 3D space.

Optionally, the plurality of preset heights include the plurality of preset heights sampled from the 3D space; and obtaining multi-height distribution image features includes: inputting the images captured by the image recording devices into a pre-trained image feature extraction model to output the multi-height distribution image features; where the pre-trained image feature extraction model is configured to learn, according to the plurality of preset heights, a probability distribution for each pixel of an image sample set having 3D labels at the plurality of preset heights.

Optionally, according to the multi-height distribution prediction results of the image features, obtaining multi-height distribution image features includes: performing an outer product between the multi-height distribution prediction results of the image features and the image features, to obtain the multi-height distribution image features.

Optionally, according to the multi-height distribution prediction results of the image features, obtaining multi-height distribution image features includes: performing dimensionality reduction on the image features to obtain dimensionality-reduced image features; and performing an outer product between the image features and the multi-height distribution prediction results of the dimensionality-reduced image features, to obtain the multi-height distribution image features.

An embodiment of the present disclosure provides a deep learning method, including: acquiring an image sample set having 3D labels in 3D perception; inputting the image sample set into an original model; extracting image features of images in the image sample set through the original model; learning height distribution information of the image features according to a plurality of preset heights through the original model, to obtain multi-height distribution prediction results of the image features; according to the multi-height distribution prediction results of the image features, sampling an image feature at a position corresponding to a BEV feature into a grid of a 3D space through the original model, to obtain a prediction result of the 3D space; adjusting model parameters of the original model according to a difference between the prediction result of the 3D space and a ground truth of a bounding box of the 3D perception; and acquiring a new image sample set having 3D labels, returning to the step of inputting the image sample set into an original model until a convergence condition is met, and using the adjusted original model as a trained image feature extraction model.

Optionally, the original model includes a height distribution prediction module; the height distribution prediction module includes a dimensionality reduction processing submodule and a height distribution prediction submodule; and learning height distribution information of the image features according to the plurality of preset heights through the original model, to obtain multi-height distribution prediction results of the image features includes: performing dimensionality reduction on the image features through the dimensionality reduction processing submodule to obtain dimensionality-reduced image features; and performing prediction according to the plurality of preset heights through the height distribution prediction submodule to output the height distribution prediction results of the image features at the plurality of preset heights.

Optionally, the original model further includes a preprocessing module and an image feature parsing module; and before performing dimensionality reduction on the image features through the dimensionality reduction processing submodule to obtain dimensionality-reduced image features, or, before performing prediction according to the plurality of preset heights through the height distribution prediction submodule to output the height distribution prediction results of the image features at the plurality of preset heights, the method further includes: performing highlighting on the images through the preprocessing module to obtain highlighted images; and performing image feature parsing on the highlighted images through the image feature parsing module to obtain the image features.

An embodiment of the present disclosure provides a feature sampling apparatus, including: an image feature extraction module, configured to: acquire images captured by image recording devices, and extract image features of the images captured by the image recording devices; a height distribution prediction module, configured to: according to a plurality of preset heights, predict height distribution information of the image features of the images, to obtain multi-height distribution prediction results of the image features; an image feature output module, configured to: according to the multi-height distribution prediction results of the image features, obtain multi-height distribution image features; and a BEV feature obtaining module, configured to: according to the multi-height distribution image features and a mapping relationship between image feature positions and grid positions in a 3D space where BEV features are located, determine multi-height distribution BEV features; and according to the multi-height distribution BEV features, sample, from the image features of the image recording devices, an image feature at a position corresponding to a BEV feature into a grid of the 3D space.

An embodiment of the present disclosure provides a deep learning apparatus, including: an image sample set acquisition module, configured to: acquire an image sample set having 3D labels in 3D perception; a sample input module, configured to: input the image sample set into an original model; an image feature parsing module, configured to: extract image features of images in the image sample set through the original model; a model learning module, configured to: learn height distribution information of the image features according to a plurality of preset heights through the original model, to obtain multi-height distribution prediction results of the image features; and according to the multi-height distribution prediction results of the image features, sample an image feature at a position corresponding to a BEV feature into a grid of a 3D space through the original model, to obtain a prediction result of the 3D space; a parameter adjustment module, configured to: adjust model parameters of the original model according to a difference between the prediction result of the 3D space and a ground truth of a bounding box of the 3D perception; and a model determination module, configured to: acquire a new image sample set having 3D labels, return to the step of inputting the image sample set into an original model until a convergence condition is met, and use the adjusted original model as a trained image feature extraction model.

An embodiment of the present disclosure provides an electronic device, including one or more processors, configured to implement any one of the foregoing methods.

An embodiment of the present disclosure provides a computer-readable storage medium, storing a program thereon, where the program, when executed by one or more processors, implements any one of the foregoing methods.

In some embodiments, the feature sampling method provided in the embodiments of the present disclosure predicts height distribution information of image features of each image according to a plurality of preset heights, to obtain multi-height distribution prediction results of the image features, which thereby reflects the actual height situation of the images. In this way, by sampling a plurality of preset heights respectively, the multi-height distribution BEV features better match the actual height situation, and thereby more accurate BEV features are obtained.

In some embodiments, the deep learning method provided in the embodiments of the present disclosure learns height distribution information of the image feature, to obtain a multi-height distribution prediction result of the image feature, and then obtain a more accurate image feature extraction model so that the image features can better reflect the actual height situation, and thereby more accurate BEV features are obtained.

Other aspects will become apparent upon reading and understanding the drawings and detailed description.

### BRIEF DESCRIPTION OF DRAWINGS

FIG. 1 is a flowchart of an overall implementation of a BEV feature sampling method according to an embodiment of the present disclosure.
FIG. 2 is a flowchart of a BEV feature sampling method according to an embodiment of the present disclosure.
FIG. 3 is a flowchart of a deep learning method for an image feature extraction model according to an embodiment of the present disclosure.
FIG. 4 is a structure diagram of an image feature extraction module shown in FIG. 1.
FIG. 5 is a structure diagram of a BEV feature sampling module shown in FIG. 1.
FIG. 6 is a structure diagram of a BEV feature sampling apparatus according to an embodiment of the present disclosure.
FIG. 7 is a structure diagram of a deep learning apparatus for an image feature extraction model according to an embodiment of the present disclosure.
FIG. 8 is a module block diagram of an electronic device according to an embodiment of the present disclosure.

### DETAILED DESCRIPTION

Reference will now be made in detail to exemplary embodiments, examples of which are illustrated in the accompanying drawings. When the following description refers to the accompanying drawings, unless otherwise indicated, the same numbers in different drawings indicate the same or similar elements. The embodiments described in the following example embodiments do not represent all embodiments consistent with one or more embodiments of the present disclosure. Rather, they are merely examples of devices and methods consistent with some aspects of one or more embodiments of the present disclosure as detailed in the appended claims.

It should be noted that in other embodiments, the steps of the corresponding method are not necessarily performed in the order shown and described in the present disclosure. In some other embodiments, the method may include more or fewer steps than those described in the present disclosure. In addition, a single step described in the present disclosure may be decomposed into a plurality of steps for description in other embodiments; and the plurality of steps described in the present disclosure may also be combined into a single step for description in other embodiments.

The method of obtaining BEV features based on geometric transformation may include an approach based on top-down geometric transformation. Specifically, first, according to the calibration parameters, a camera intrinsic and extrinsic parameter transformation matrix is utilized to obtain the corresponding positions on the image onto which grid points in a 3D space are projected. Second, the features at the corresponding positions are sampled into the original 3D space, i.e., feature sampling, to ultimately construct BEV spatial features.

However, the aforementioned calibration parameters generally assume that all objects lie on the ground plane, so these calibration parameters do not match real-world heights. Even if the 3D space has z-axis values, the z-axis values still fail to reflect actual heights. In this way, features sampled in this way deviate from the real world and exhibit low accuracy.

In view of this, an embodiment of the present disclosure provides a BEV feature sampling method, including: acquiring images captured by image recording devices, and extracting image features of the images captured by the image recording devices; according to a plurality of preset heights, predicting height distribution information of the image features of the images, to obtain multi-height distribution prediction results of the image features; according to the multi-height distribution prediction results of the image features, obtaining multi-height distribution image features; according to the multi-height distribution image features and a mapping relationship between image feature positions and grid positions in a 3D space where panoramic BEV features are located, determining multi-height distribution BEV features; and according to the multi-height distribution BEV features, sampling, from the image features of the image recording devices, an image feature at a position corresponding to a BEV feature into a grid of the 3D space.

In the embodiments of the present disclosure, according to a plurality of preset heights, height distribution information of the image features of the images is predicted to obtain prediction results of the image features with multi-height distribution information (may also be referred to as multi-height distribution prediction results of the image features), which thereby reflects the actual height situation of the images. In this way, by sampling a plurality of heights respectively, the BEV features with multi-height distribution information (may also be referred to as multi-height distribution BEV features) better match the actual height situation, and thereby more accurate BEV features are obtained.

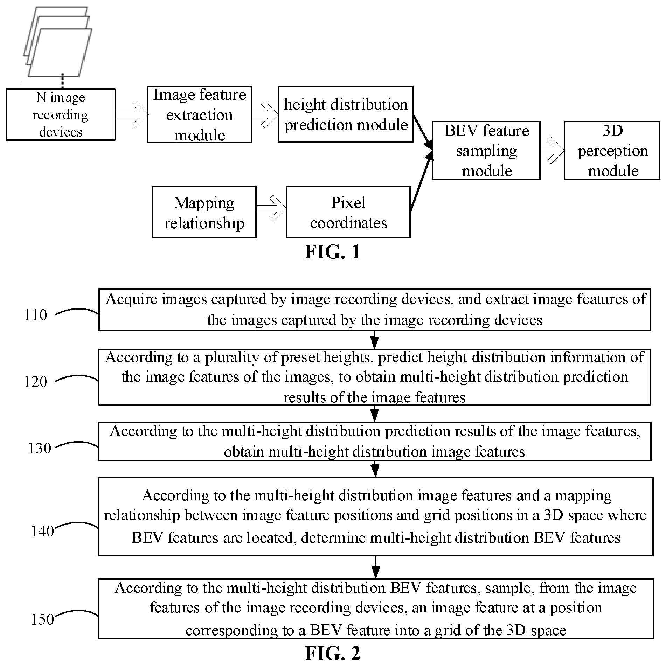

FIG. 1 is a flowchart of an overall implementation of a BEV feature sampling method according to an embodiment of the present disclosure.

As shown in FIG. 1, the BEV feature sampling method of the embodiments of the present disclosure may be performed by an electronic device. An application scenario of the BEV feature sampling method may be a 3D perception scenario. 3D perception may include, but is not limited to, implementing the detection of 3D bounding boxes. The 3D bounding boxes may include different types of bounding boxes. For example, the different types may be one or more of a person, an object, and a vehicle. In order to improve the learning accuracy of the original model for image feature extraction, it can be achieved through the backpropagated gradients from final 3D perception. Thus, the accuracy of detection results of 3D bounding boxes may be determined, without the need to separately set a loss function for height distribution prediction. Instead, for different types of bounding boxes, the loss functions used to train the original model for image feature extraction are set differently, depending on the actual situation.

The electronic device may include, but is not limited to, a BEV feature sampling apparatus. The BEV feature sampling apparatus may be, but is not limited to, one or more of an image feature extraction module, a height distribution prediction module, a BEV feature sampling module, and a 3D perception module. The 3D perception module is configured to implement the detection of 3D bounding boxes. Other modules are described in detail below.

FIG. 2 is a flowchart of a BEV feature sampling method according to an embodiment of the present disclosure.

As shown in FIG. 2, the BEV feature sampling method may include, but is not limited to, step 110 to step 150 described below.

At step 110, images captured by image recording devices are acquired, and image features of the images captured by the image recording devices are extracted.

The image recording devices may be configured to capture images, and store images captured by the devices. For example, the image recording devices may include, but are not limited to, a camera, a video camera, or a radar. Further, the camera may be, but is not limited to, a fisheye camera. In this way, images may be captured by a plurality of fisheye cameras.

Continuing with FIG. 1, the image recording devices may be a plurality of different devices at different positions. For example, the image recording devices may include, but are not limited to, four fisheye cameras, which are respectively placed in the front, rear, left, and right directions of the driven vehicle to ensure that the camera field of view is sufficient to cover the vehicle's surroundings and are calibrated by using the checkerboard calibration board to acquire intrinsic parameters and perform distortion correction.

At step 120, height distribution information of the image features of the images is predicted according to a plurality of preset heights, to obtain multi-height distribution prediction results of the image features.

The height distribution information may indicate distribution of each pixel at different heights. The height distribution information may be, but is not limited to, height distribution probabilities.

The plurality of preset heights may reflect different heights. The multi-height distribution prediction result of the image feature indicates that any one pixel in the image has a plurality of height distributions. For example, the multi-height distribution prediction result of any one pixel in the image is a vector.

The plurality of preset heights may include, but are not limited to, a preset height range or a plurality of preset height values. Of course, no specific limitation is imposed herein on the preset height range or the plurality of preset height values. The plurality of preset heights may also be a plurality of preset height values uniformly sampled from a height range of 0 meters to 10 meters. For example, the plurality of preset heights are respectively 1 meter, 2 meters, 3 meters, 4 meters, 5 meters, 6 meters, 7 meters, 8 meters, 9 meters, and 10 meters. Each pixel is captured according to each of the plurality of preset heights, to obtain a vector of each pixel, and the vector of each pixel may be a 10-dimensional vector. For example, the vector is [x₁, x₂, ......x₁₀]. The vector indicates the height distribution of each pixel. When the pixel is actually a pixel with a preset height of 2 meters, for the pixel, the distribution probability value corresponding to a preset height of 2 meters in the plurality of preset heights is larger, and the distribution probability values corresponding to remaining preset heights in the plurality of preset heights are smaller.

At step 130, according to the multi-height distribution prediction results of the image features, image features with multi-height distribution information (may also be referred to as multi-height distribution image features) are obtained.

In this way, the actual multi-height distribution information of the image features can be better reflected.

At step 140, according to the multi-height distribution image features and a mapping relationship between image feature positions and grid positions in a 3D space where panoramic BEV features are located, multi-height distribution BEV features are determined.

The grid position of the 3D space is a virtual grid obtained by pre-dividing the 3D space, and is not an actual grid. The mapping relationship between the image feature positions and the grid positions of the 3D space where the panoramic BEV features are located indicates the corresponding relationship between image feature positions and grid positions of the 3D space where panoramic BEV features are located. The pre-divided grids of the 3D space correspond to the image feature positions of the image recording devices.

Continuing with FIG. 1, the mapping relationship may refer to a mapping table between center points of grids pre-divided in the 3D space and pixel coordinates (pix coords) corresponding to image feature positions of four fisheye cameras. In the subsequent use process, images of the four fisheye cameras are acquired, and based on the image feature position, the center of the target grid pre-divided in the 3D space where the BEV feature is located can be determined through the position mapping table. In this way, the BEV feature may be determined by using the center of the target grid.

Further, according to the pix coords mapping table, for each point (i.e., center point) of BEV features, the corresponding position values are sampled from the image features of four cameras to obtain the required BEV features. The BEV features are subsequently used as input to network downstream tasks for 3D object detection.

At step 150, according to the multi-height distribution BEV features, an image feature at a position corresponding to a BEV feature from the image features of the image recording devices is sampled into grids of the 3D space.

In this way, a panoramic BEV that more conforms to the real scene may be reconstructed.

Continuing with FIG. 2, the multi-height distribution image features in step 130 may be obtained through the various embodiments described below.

In a first embodiment, the plurality of preset heights include a plurality of preset heights sampled from the 3D space; and the multi-height distribution image features are obtained by adopting the following approach. The images captured by the image recording devices are input into a pre-trained image feature extraction model to output multi-height distribution image features, where the pre-trained image feature extraction model is configured to learn, in accordance with the plurality of preset heights, a probability distribution for each pixel of an image sample set having 3D labels at the plurality of preset heights. In this way, by learning the image sample set having 3D labels, the probability distribution for each pixel at the plurality of preset heights may be reflected, and the probability distribution for each pixel of the images captured by the image recording devices at the plurality of preset heights may be obtained subsequently. In this way, the relationship between the image features of these pre-captured image sample sets is used for learning, to improve the accuracy of the height distribution of the image features. Of course, the image feature extraction model may be obtained by the following steps of the deep learning method for the image feature extraction model, which will be described in detail below.

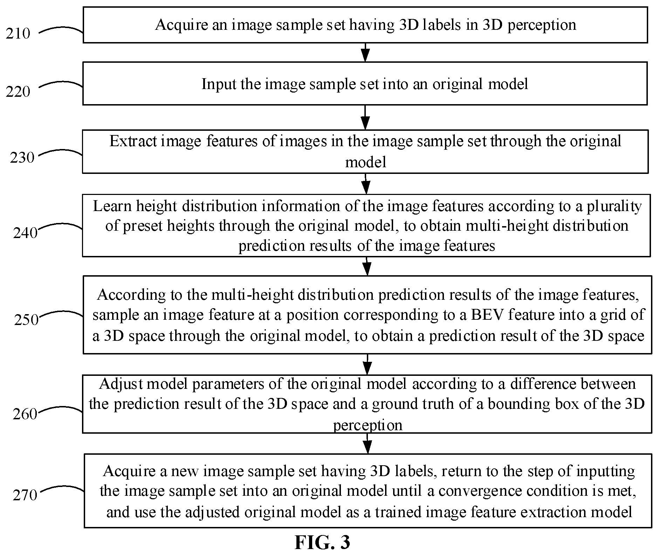

FIG. 3 is a flowchart of a deep learning method for an image feature extraction model according to an embodiment of the present disclosure.

With reference to FIG. 1, as shown in FIG. 3, the deep learning method for an image feature extraction model may include, but is not limited to, step 210 to step 270 described below.

At step 210, an image sample set having 3D labels in 3D perception is obtained.

The label herein may be a specific label determined based on the application scenario. For example, the 3D label may be a label of a 3D bounding box.

At step 220, the image sample set is input into an original model.

The original model may be, but is not limited to, a convolutional neural network (CNN) including a deep learning network. The CNN may include convolutional layers, pooling layers, and fully connected layers. Subnetworks may be added in the CNN, and these subnetworks may be composed of convolutional layers. These subnetworks may learn the height distribution information of the image features, and may obtain the multi-height distribution prediction results of the image features. Any CNN that can learn height distribution information of image features according to a plurality of preset heights through a subnetwork, to obtain the multi-height distribution prediction results of the image features and that can extract the image features through a convolutional layer and a pooling layer shall fall within the protection scope of the embodiments of the present disclosure, and is not be given any examples herein.

At step 230, image features of images in the image sample set are extracted through the original model.

At step 240, height distribution information of the image features is learned according to a plurality of preset heights through the original model, to obtain multi-height distribution prediction results of the image features.

At step 250, according to the multi-height distribution prediction results of the image features, image features at positions corresponding to BEV features are sampled into grids of a 3D space through the original model, to obtain prediction results of the 3D space.

At step 260, model parameters of the original model are adjusted according to a difference between the prediction results of the 3D space and the ground truth of the bounding boxes of the 3D perception.

At step 270, a new image sample set having 3D labels is acquired, and return to the step of inputting the image sample set into an original model until a convergence condition is met, and the adjusted original model is used as a trained image feature extraction model.

Through the above steps, the image feature extraction model can extract image features with multi-height distribution information, thereby obtaining information such as BEV features with multi-height distribution information.

In some embodiments, the deep learning method for an image feature extraction model in the present disclosure learns the height distribution information of the image features to obtain multi-height distribution prediction results of the image features, thereby obtaining a more accurate image feature extraction model, so that the image features can better reflect the actual height situation, and thereby more accurate BEV features are obtained

The original model includes a height distribution prediction module, where the height distribution prediction module includes a dimensionality reduction processing submodule and a height distribution prediction submodule. Correspondingly, step 240 may include: performing, through the dimensionality reduction processing submodule, dimensionality reduction on the image features to obtain dimensionality-reduced image features; and performing, through the height distribution prediction submodule, prediction according to a plurality of preset heights to output prediction results of the height distribution information of the image features at the plurality of preset heights. In this way, not only the height distribution of the actual image feature may be obtained, but also the subsequent computation amount can be reduced.

In surround-view visual perception in the related art, a method for obtaining BEV features based on geometric transformation includes a bottom-up transformation approach. Specifically, the working LSS (Lift, Splat, Shot) of the bottom-up transformation approach is to assign a depth distribution to each pixel of the camera image, construct a view frustum, project each camera view frustum into a 3D space through extrinsic parameters to obtain a 3D feature, and flatten the 3D feature to obtain a BEV feature.

Compared with the bottom-up transformation approach, the top-down transformation approach included in the method for obtaining BEV features based on geometric transformation does not require depth information prediction, thereby reducing the difficulty of network learning. Meanwhile, the top-down transformation approach has the technical problem that the accuracy of BEV feature representation is limited due to lack of depth distribution information. In practical applications, since the bottom-up transformation approach increases the computation of the depth dimension, the computation amount is too large, resulting in the technical problems of too slow inference and difficult deployment.

In the embodiments of the present disclosure, based on the bottom-up transformation approach and the top-down transformation approach, a height distribution prediction module is added to the network when the BEV feature is obtained based on top-down sampling. Then, sampling is performed according to the height distribution, so as to make up for the defect that it is limited by the accuracy of internal and extrinsic parameter projection, and obtain a more accurate and effective BEV feature representation, while retaining the top-down transformation approach, without the need to predict the depth information, which reduces the computation in the depth dimension, reduces the computation amount, and is easy to deploy.

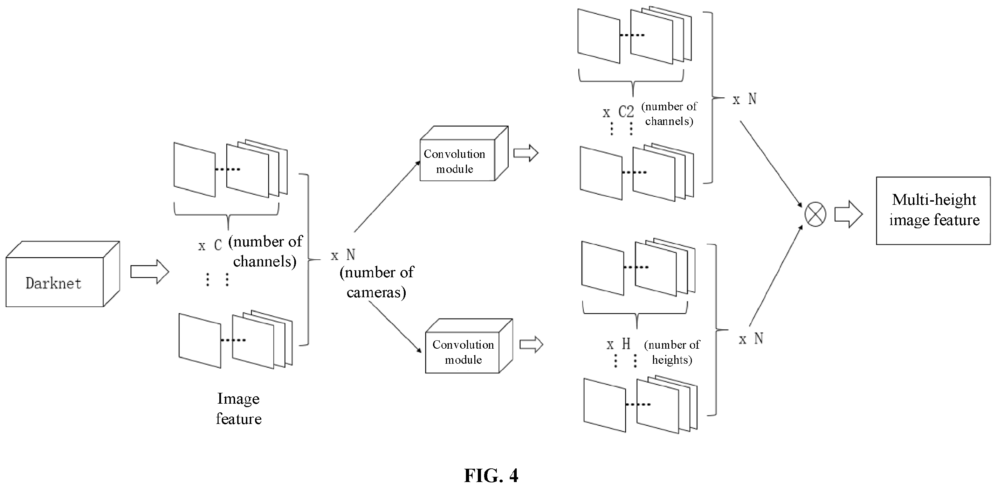

FIG. 4 is a structure diagram of an image feature extraction module shown in FIG. 1.

With reference to FIG. 1, as shown in FIG. 4, the image feature extraction module is a deep learning subnetwork, images of four camera are input into the subnetwork and the subnetwork is shared, and four corresponding image features are output. In the present disclosure, a Darknet framework is used as a structure of the subnetwork, which is used to pre-train the model. The pre-training is to implement preprocessing, for example, highlighting, on an image, so as to subsequently obtain image features more accurately.

After the respective camera image features with the quantity C1 of channels are preliminarily extracted, the dimensionality reduction processing submodule and the height distribution prediction submodule included in the height distribution prediction module may be respectively implemented by two sub-convolution modules. The dimensionality reduction processing submodule corresponds to a sub-convolution module described below. The height distribution prediction submodule corresponds to another sub-convolution module described below. One of the sub-convolution modules uniformly samples H number of heights from the 3D space, and predicts the probability distribution for each pixel at the preset H number of heights for each camera image, which can be achieved by adding a softmax normalized exponential function layer to the convolution result along the height dimension. The other of the sub-convolution modules further compresses the quantity of channels of the image features to C2 to reduce the subsequent computation amount. Finally, an outer product is performed on the height distribution prediction results and the image features, so that multi-height distribution image features may be obtained, i.e., multi-height image features (Multi Height Img Feature) in FIG. 4 can be obtained. H, C1, and C2 are all positive integers, and the value of C2 is less than the value of C1.

Continuing with FIG. 4, the original model includes a preprocessing module and an image feature parsing module. Before performing dimensionality reduction on the image features through the dimensionality reduction processing submodule to obtain dimensionality-reduced image features, or, before performing prediction according to the plurality of preset heights through the height distribution prediction submodule to output the height distribution prediction results of the image features at the plurality of preset heights, the method further includes: performing highlighting on the images through the preprocessing module to obtain highlighted images; and performing image feature parsing on the highlighted images through the image feature parsing module to obtain the image features. In this way, more accurate image features may be obtained, thereby obtaining more accurate multi-height distribution image features.

Continuing with FIG. 2, the multi-height distribution image features in step 130 may also be obtained by the embodiments described below.

In a second embodiment, with continued reference to FIG. 4, dimensionality reduction is performed on the image features to obtain dimensionality-reduced image features; and an outer product between the image features and the multi-height distribution prediction results of the dimensionality-reduced image features is performed to obtain the multi-height distribution image features. In this way, not only the computation amount can be reduced, but also the multi-height distribution image features may be obtained.

In a third embodiment, an outer product is performed between the multi-height distribution prediction results of the image features and the image features, to obtain the multi-height distribution image features. In this way, the multi-height distribution prediction results of the image features and the image features are directly used, more real information of the image features is retained, and the obtained multi-height distribution image features are more realistic.

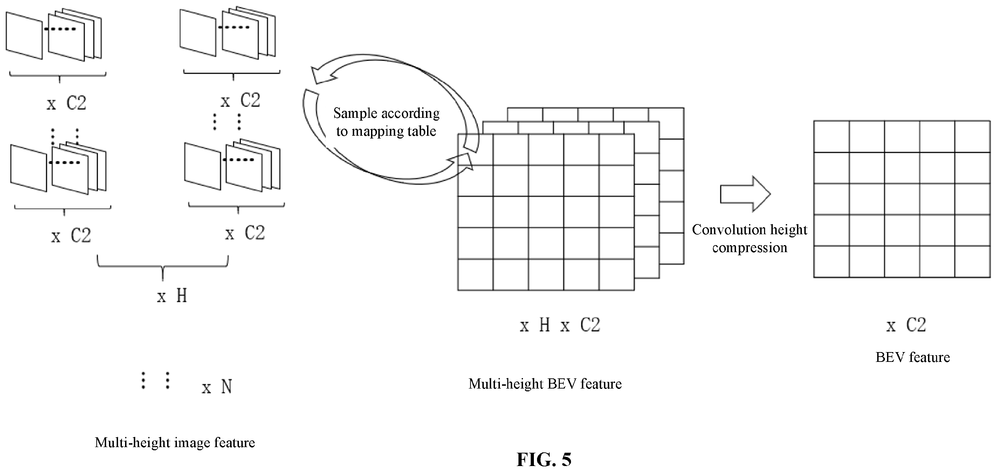

FIG. 5 is a structure diagram of a BEV feature sampling module shown in FIG. 1.

With continued reference to FIG. 1 to FIG. 4, as shown in FIG. 5, step 150 may further include the following two steps. The first step includes: fusing the multi-height distribution BEV features to obtain fused BEV features. The second step includes: according to the fused BEV features, sampling an image feature of the image recording devices at a position corresponding to a fused BEV feature into a grid of the 3D space. In this way, the fused BEV features more easily reflect the actual information of the images, and the accuracy of the fused BEV features is improved, so that the image feature of each image recording device at the position corresponding to the fused BEV feature is more accurate.

Continuing with FIG. 5, the output of the Pix coords and height distribution prediction module is used as the input of the BEV feature sampling module. The BEV feature sampling module, according to the pix coords mapping table, searches for respective values of positions corresponding to each camera image feature for each grid of the BEV, and samples the values into the grids. Since height distribution prediction is performed on the image features, the image features at a plurality of heights can be provided, and this sampling process is to perform BEV sampling for each preset height, and finally the BEV features at a plurality of heights can be obtained. The BEV features are compressed and fused according to the height dimension, so that a BEV feature representation integrating multi-height information can be obtained. In the present disclosure, the height dimension is fused through a convolution submodule, and the multi-height BEV features are compressed by network autonomous learning. The BEV features are used as an input of a downstream task of the network, to provide a richer and accurate feature representation for subsequent 3D perception, which is conducive to improving model perception performance.

Compared with the deep learning-based surround-view visual perception method in the related art, the present disclosure improves the BEV feature representation acquisition method. In the process of sampling an image feature to a BEV feature based on top-down sampling, the present disclosure samples a plurality of preset heights from a 3D space, designs a network to perform probability distribution prediction on pixels of camera images at the plurality of preset heights, and then performs BEV sampling computation on the plurality of preset heights, thereby obtaining a BEV feature representation with height distribution information, providing a more accurate and rich feature representation for a downstream 3D perception task, improving the accuracy of the network for 3D surround-view perception, and maintaining the advantages of easy training and easy deployment of the model.

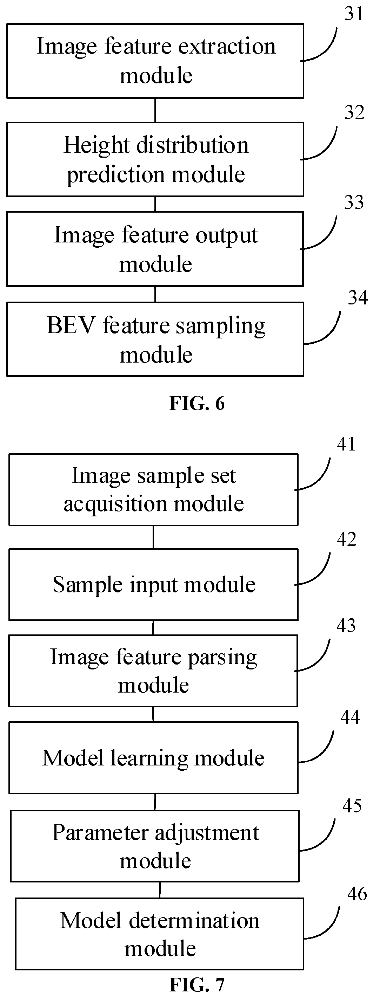

FIG. 6 is a structure diagram of a BEV feature sampling apparatus according to an embodiment of the present disclosure.

With reference to FIG. 1, as shown in FIG. 6, the BEV feature sampling apparatus includes an image feature extraction module 31, a height distribution prediction module 32, an image feature output module 33, and a BEV feature sampling module 34.

The image feature extraction module 31 is configured to acquire images captured by image recording devices, and extract image features of the images captured by the image recording devices.

The height distribution prediction module 32 is configured to according to a plurality of preset heights, predict height distribution information of the image features of the images, to obtain multi-height distribution prediction results of the image features.

The image feature output module 33 is configured to according to the multi-height distribution prediction results of the image features, obtain multi-height distribution image features.

The BEV feature sampling module 34 is configured to according to the multi-height distribution image features and a mapping relationship between image feature positions and grid positions in a 3D space where BEV features are located, determine multi-height distribution BEV features; and according to the multi-height distribution BEV features, sample, from the image features of the image recording devices, an image feature at a position corresponding to a BEV feature into a grid of the 3D space.

FIG. 7 is a structure diagram of a deep learning apparatus for an image feature extraction model according to an embodiment of the present disclosure.

With reference to FIG. 1, as shown in FIG. 7, the deep learning apparatus for an image feature extraction model includes an image sample set acquisition module 41, a sample input module 42, an image feature parsing module 43, a model learning module 44, a parameter adjustment module 45, and a model determination module 46.

The image sample set acquisition module 41 is configured to acquire an image sample set having 3D labels in 3D perception.

The sample input module 42 is configured to input the image sample set into an original model.

The image feature analysis module 43 is configured to extract image features of images in the image sample set through the original model.

The model learning module 44 is configured to learn height distribution information of the image features according to a plurality of preset heights through the original model, to obtain multi-height distribution prediction results of the image features; and according to the multi-height distribution prediction results of the image features, sample an image feature at a position corresponding to a BEV feature into a grid of a 3D space through the original model, to obtain a prediction result of the 3D space.

The parameter adjustment module 45 is configured to adjust model parameters of the original model according to a difference between the prediction result of the 3D space and a ground truth of a bounding box of the 3D perception.

The model determination module 46 is configured to acquire a new image sample set having 3D labels, return to the step of inputting the image sample set into an original model until a convergence condition is met, and use the adjusted original model as a trained image feature extraction model.

The implementation process of the functions and effects of each module/submodule in the above device can refer to the implementation process of the corresponding steps in the above method, and the same technical effect can be achieved, which is not be repeated herein.

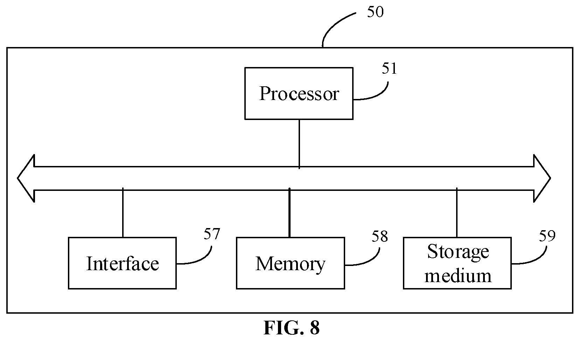

FIG. 8 is a module block diagram of an electronic device according to an embodiment of the present disclosure.

As shown in FIG. 8, the electronic device 50 includes one or more processors 51 for implementing the foregoing deep learning method for the image feature extraction model, and/or the foregoing BEV feature sampling method.

Of course, the electronic device may include, but is not limited to, a mobile vehicle-mounted terminal and a mobile terminal independent of the vehicle. The vehicle-mounted mobile terminal may be, but is not limited to, a vehicle body processor, a center console, or a vehicle head-up display (HUD). The mobile terminal independent of the vehicle may be, but is not limited to, a smartphone, a smartphone back, a tablet computer, or a notebook computer.

In some embodiments, the electronic device 50 may include a computer-readable storage medium 59, and the computer-readable storage medium 59 may store a program that can be called by the processor 51, and may include a non-volatile storage medium. In some embodiments, the electronic device 50 may include a memory 58 and an interface 57. In some embodiments, the electronic device 50 may further include other hardware according to actual applications.

The computer-readable storage medium 59 of the embodiments of the present disclosure stores a program thereon, and when the program is executed by the processor 51, the deep learning method for an image feature extraction model as described above and/or the BEV feature sampling method as described above are implemented.

The present disclosure may use a form of a computer program product implemented on one or more computer-readable storage media 59 (including but not limited to a disk memory, a CD- ROM, an optical memory, etc.) including program code. The computer-readable storage medium 59 includes permanent and non-permanent, removable and non-removable media, and may implement information storage in any method or technology. The information may be a computer-readable instruction, a data structure, a program module, or other data. Examples of the computer-readable storage medium 59 include, but are not limited to, a Phase-Change Random Access Memory (PRAM), a Static Random-Access Memory (SRAM), a Dynamic Random-Access Memory (DRAM), another type of Random Access Memory (RAM), a Read-Only Memory (ROM), an Electrically Erasable Programmable Read-Only Memory (EEPROM), a flash memory or another memory technology, a Compact Disc Read-Only Memory (ROM), a Digital Versatile Disc (DVD) or another optical storage, a magnetic cassette, a magnetic tape disk storage or another magnetic storage device, or any other non-transmission medium, and may be configured to store information that can be accessed by a computing device.

A person of ordinary skill in the art may understand that all or some of the steps in the foregoing method may be implemented by a program instructing related hardware (for example, a processor), and the program may be stored in a computer-readable storage medium, for example, a read-only memory, a magnetic disk, or an optical disk. Alternatively, all or part of the steps of the above embodiments may also be implemented using one or more integrated circuits. Correspondingly, each module/unit in the above embodiments may be implemented in the form of hardware, for example, implementing its corresponding function through an integrated circuit, or may be implemented in the form of a software functional module, for example, implementing its corresponding function through a processor executing a program/instruction stored in a memory. The present disclosure is not limited to any specific form of combination of hardware and software.

The foregoing descriptions are merely some embodiments of the present disclosure, and are not intended to limit the present disclosure.

It should also be noted that the terms "include", "comprise" or any other variants thereof are intended to cover non-exclusive inclusion, so that a process, method, commodity or device that includes a series of elements not only includes those elements, but also includes other elements that are not explicitly listed, or further includes elements inherent to such a process, method, commodity or device. In the absence of more limitations, an element defined by the phrase "including a..." does not exclude the presence of other identical elements in the process, method, commodity or device that includes the element.

## Claims

1. A feature sampling method, comprising:
acquiring images captured by image recording devices, and extracting image features of the images captured by the image recording devices;
according to a plurality of preset heights, predicting height distribution information of the image features of the images, to obtain multi-height distribution prediction results of the image features;
according to the multi-height distribution prediction results of the image features, obtaining multi-height distribution image features;
according to the multi-height distribution image features and a mapping relationship between image feature positions and grid positions in a three-dimensional, 3D, space where panoramic bird's-eye view, BEV, features are located, determining multi-height distribution BEV features; and
according to the multi-height distribution BEV features, sampling, from the image features of the image recording devices, an image feature at a position corresponding to a BEV feature into a grid of the 3D space.

2. The feature sampling method according to claim 1, wherein according to the multi-height distribution BEV features, sampling, from the image features of the image recording devices, the image feature at the position corresponding to the BEV feature into the grid of the 3D space comprises:
fusing the multi-height distribution BEV features to obtain fused BEV features; and
according to the fused BEV features, sampling an image feature of the image recording devices at a position corresponding to a fused BEV feature into a grid of the 3D space.

3. The feature sampling method according to claim 1 or 2, wherein the plurality of preset heights comprise the plurality of preset heights sampled from the 3D space; and obtaining multi-height distribution image features comprises:
inputting the images captured by the image recording devices into a pre-trained image feature extraction model to output the multi-height distribution image features; wherein the pre-trained image feature extraction model is configured to learn, according to the plurality of preset heights, a probability distribution for each pixel of an image sample set having 3D labels at the plurality of preset heights.

4. The feature sampling method according to claim 1 or 2, wherein according to the multi-height distribution prediction results of the image features, obtaining multi-height distribution image features comprises:
performing an outer product between the multi-height distribution prediction results of the image features and the image features, to obtain the multi-height distribution image features.

5. The feature sampling method according to claim 1 or 2, wherein according to the multi-height distribution prediction results of the image features, obtaining multi-height distribution image features comprises:
performing dimensionality reduction on the image features to obtain dimensionality-reduced image features; and
performing an outer product between the image features and multi-height distribution prediction results of the dimensionality-reduced image features, to obtain the multi-height distribution image features.

6. A deep learning method, comprising:
acquiring an image sample set having 3D labels in 3D perception;
inputting the image sample set into an original model;
extracting image features of images in the image sample set through the original model;
learning height distribution information of the image features according to a plurality of preset heights through the original model, to obtain multi-height distribution prediction results of the image features;
according to the multi-height distribution prediction results of the image features, sampling an image feature at a position corresponding to a BEV feature into a grid of a 3D space through the original model, to obtain a prediction result of the 3D space;
adjusting model parameters of the original model according to a difference between the prediction result of the 3D space and a ground truth of a bounding box of the 3D perception; and
acquiring a new image sample set having 3D labels, returning to the step of inputting the image sample set into an original model until a convergence condition is met, and using the adjusted original model as a trained image feature extraction model.

7. The deep learning method according to claim 6, wherein the original model comprises a height distribution prediction module; the height distribution prediction module comprises a dimensionality reduction processing submodule and a height distribution prediction submodule; and
learning height distribution information of the image features according to the plurality of preset heights through the original model, to obtain multi-height distribution prediction results of the image features comprises:
performing dimensionality reduction on the image features through the dimensionality reduction processing submodule to obtain dimensionality-reduced image features; and
performing prediction according to the plurality of preset heights through the height distribution prediction submodule to output height distribution prediction results of the image features at the plurality of preset heights.

8. The deep learning method according to claim 7, wherein the original model further comprises a preprocessing module and an image feature parsing module; and
before performing dimensionality reduction on the image features through the dimensionality reduction processing submodule to obtain dimensionality-reduced image features, or, before performing prediction according to the plurality of preset heights through the height distribution prediction submodule to output height distribution prediction results of the image features at the plurality of preset heights, the method further comprises:
performing highlighting on the images through the preprocessing module to obtain highlighted images; and
performing image feature parsing on the highlighted images through the image feature parsing module to obtain the image features.

9. A feature sampling apparatus, comprising:
an image feature extraction module, configured to: acquire images captured by image recording devices, and extract image features of the images captured by the image recording devices;
a height distribution prediction module, configured to: according to a plurality of preset heights, predict height distribution information of the image features of the images, to obtain multi-height distribution prediction results of the image features;
an image feature output module, configured to: according to the multi-height distribution prediction results of the image features, obtain multi-height distribution image features; and
a BEV feature obtaining module, configured to: according to the multi-height distribution image features and a mapping relationship between image feature positions and grid positions in a 3D space where BEV features are located, determine multi-height distribution BEV features; and according to the multi-height distribution BEV features, sample, from the image features of the image recording devices, an image feature at a position corresponding to a BEV feature into a grid of the 3D space.

10. A deep learning apparatus, comprising:
an image sample set acquisition module, configured to: acquire an image sample set having 3D labels in 3D perception;
a sample input module, configured to: input the image sample set into an original model;
an image feature parsing module, configured to: extract image features of images in the image sample set through the original model;
a model learning module, configured to: learn height distribution information of the image features according to a plurality of preset heights through the original model, to obtain multi-height distribution prediction results of the image features; and according to the multi-height distribution prediction results of the image features, sample an image feature at a position corresponding to a BEV feature into a grid of a 3D space through the original model, to obtain a prediction result of the 3D space;
a parameter adjustment module, configured to: adjust model parameters of the original model according to a difference between the prediction result of the 3D space and a ground truth of a bounding box of the 3D perception; and
a model determination module, configured to: acquire a new image sample set having 3D labels, return to the step of inputting the image sample set into an original model until a convergence condition is met, and use the adjusted original model as a trained image feature extraction model.

11. An electronic device, comprising one or more processors for implementing the feature sampling method according to any one of claims 1-5, and/or the deep learning method according to any one of claims 6-8.

12. A computer-readable storage medium, storing a program thereon, wherein the program, when executed by one or more processors, implements the feature sampling method according to any one of claims 1-5, and/or the deep learning method according to any one of claims 6-8.
